# EUROPÄISCHE PATENTANMELDUNG

(11) **EP 1 239 093 A2**
(43) Veröffentlichungstag der Anmeldung: **11.09.2002**
(21) Anmeldenummer: 02002140.8
(22) Anmeldetag: 29.01.2002
(51) Int. Cl.: E04B 1/94, E06B 5/16

(54) **Brandschutzelement, insbesondere für Feuerschutztüren**

(30) Priorität: 21.02.2001 DE 10108114; 19.09.2001 DE 20115713 U; 22.11.2001 DE 20119043 U
(71) Anmelder: Deutsche Rockwool Mineralwoll GmbH & Co. OHG, 45966 Gladbeck (DE)
(72) Erfinder: Heermann, Harald, 45134 Essen (DE)
(74) Vertreter: Wanischeck-Bergmann, Axel

(57) **Zusammenfassung**

Das Brandschutzelement (1) mit Schichtstruktur ist insbesondere für Feuerschutztüren bestimmt und besteht vorzugsweise aus zwei äußeren Steinwolle-Dämmplatten und zumindest einer mittleren Schicht aus anorganischem Werkstoff. Die mittlere Schicht (4) besteht aus einer Gipsplatte, die mit den Steinwolle-Dämmplatten (2, 3) durch einen Kleber aus anorganischen Bestandteilen verbunden ist. Die Gipsplatte (4) kann zweckmäßig auf mindestens einer großen Oberfläche mit einem Gewebe oder einem Vlies aus Glasfasern (5, 6) versehen sein. Durch die Verwendung von vorgefertigten Gipsplatten für die mittlere Schicht der Brandschutzelemente, die ein- oder beidseitig mit einem Gewebe oder einem Vlies aus Glasfasern als Auflage für die Steinwolle-Dämmplatten versehen sein können, ergibt sich eine wesentliche Vereinfachung der Herstellung solcher Brandschutzelemente, die auch zu einer Beschleunigung des Herstellungsverfahrens führt. Die Gipsplatten bilden einen stabilen Unterbau für die außenliegenden Steinwolle-Dämmplatten. Für die Verklebung mit diesen wird weniger Kleber benötigt, der deshalb auch schneller aushärtet und damit zu einer erheblichen Produktionssteigerung auf den vorhandenen Produktionseinrichtungen führt.

## Beschreibung

Die Erfindung betrifft ein Brandschutzelement mit Schichtstruktur, insbesondere für Feuerschutztüren, bestehend aus vorzugsweise zwei äußeren Mineralwolle-, insbesondere Steinwoll-Dämmplatten und zumindest einer mittleren Schicht aus anorganischem Werkstoff.

Als Feuerschutzabschlüsse mit bestimmter Feuerwiderstandsklasse nach DIN 4102 Teil 5 gelten Stahltüren nach DIN 18082, Teil 1 oder Teil 3. Feuerschutzabschlüsse sind beispielsweise selbstschließende Türen, Klappen und Tore, die entsprechend der Definition der Norm dazu bestimmt sind, im eingebauten Zustand den Durchtritt eines Feuers durch Öffnungen in Wänden und Decken zu behindern.

Die Feuerwiderstandsdauer dieser Einbauten bemißt sich nach der Zeit, in der diese den Durchtritt des Feuers verhindern. Die Feuerwiderstandsdauer wird gemäß DIN 4102-4 geprüft. Es wird als wesentliches Prüfkriterium die Zeitdauer gemessen, bis zu der die Oberflächentemperatur der feuerabgewandte Seite eines Türelements beispielsweise < 180°C bleibt.

Es werden die Feuerwiderstandsklassen T 30, T 60, T 90, T 120 und T 180 unterschieden. Die Zahl entspricht der Feuerwiderstanddauer in Minuten. Feuerschutzabschlüsse nach DIN 18082, nachfolgend generell nur noch als Feuerschutztüren bezeichnet, bestehen aus Blechkonstruktionen, in die sogenannte Brandschutzelemente eingelegt werden. Das Zusammenfügen der Feuerschutztüren erfolgt innerhalb kürzester Zeit auf leistungsfähigen Produktionslinien, so daß die Brandschutzelemente für die Handhabung bei der Herstellung der Türen ein möglichst geringes Gewicht aufweisen sollen. Gleichzeitig können die Halteelemente der Türen sowie die Zargen geringer dimensioniert werden. Das Brandschutzelement muß eine für die übliche Nutzung, insbesondere gegen Erschütterungen ausreichende innere Steifigkeit aufweisen. Um die Feuerwiderstandsfähigkeit zu erreichen, muß das Brandschutzelement auch im Brandfall formstabil bleiben und eine geringe Wärmeleitfähigkeit bei hohen Temperaturen aufweisen.

Bei Türen mit geringer Feuerwiderstandsdauer haben sich Brandschutzelemente aus Mineralwolle-, insbesondere Steinwolle-Dämmplatten bewährt. Diese Mineralwolle-, insbesondere Steinwolle-Dämmplatten weisen eine Rohdichte von über 100 kg/m³ auf und sind zumeist mit geringen Mengen eines duroplastisch aushärtenden Phenol-Formaldehyd-Harnstoffharzes gebunden. Da die organischen Bestandteile naturgemäß zu einem Energietransfer auf die dem Feuer abgewandte Seite beitragen, muß ihr Anteil in dem Brandschutzelement möglichst gering sein.

Steinwolle-Dämmplatten, die beispielsweise mit nanoskaliger Kieselsäure nach dem Sol-Gel-Verfahren gebunden sind, weisen diese Nachteile nicht auf.

Da die Blechummantelungen der Türen aus Gründen des Korrosionsschutzes mit einem Farbanstrich versehen sind, der seinerseits ebenfalls zu dem unerwünschten Energietransfer beiträgt, sollte das Brandschutzelement energieabsorbierende und damit temperatursenkende Stoffe enthalten. Häufig werden hierzu Hydratverbindungen verwendet, bei denen erhebliche Mengen an Wärmeenergie erforderlich sind, um diese Stoffe auf die Dehydratisierungstemperaturen zu erwärmen, die chemische Bindung aufzuheben und das Wasser zu verdampfen. Ergänzend zu Hydratverbindungen sind hierfür beispielsweise auch Karbonate oder hydrosilikatische Verbindungen geeignet.

Derartige Verbindungen können allein oder in Gemischen in der Fasermasse der Dämmstoffplatten gleichmäßig verteilt werden. Die Wirksamkeit kann auch durch die Konzentration der Zuschläge oder eines Teils derselben in den mittleren Zonen des Brandschutzelements beeinflußt werden.

Es ist üblich, beispielsweise Aluminiumhydroxid, Magnesiumhydroxid oder andere Substanzen etwa im Verhältnis 1:1, also in erheblichen Mengen in die Fasermasse einzubringen.

In der DE 38 24 598 A1 wird eine Einlage für eine feuerhemmende Tür beschrieben, die aus zwei Schichten Mineralwolle besteht, die mittig durch eine Schicht aus einem Gemisch eines wasserabspaltenden Hydroxids und einem Wasserglas oder Kieselsol verbunden sind.

In der DE 295 07 498 U1 werden die insbesondere verfahrenstechnischen Nachteile bei der Herstellung solcher Brandschutzelemente herausgestellt. Die Verbesserung nach der DE 295 07 498 U1 besteht darin, das naturgemäß nasse Gemisch nicht mehr auf die Oberflächen der Mineralwolle-Dämmplatten direkt aufzutragen und jeweils zwei Platten zu einem Brandschutzelement zusammenzukleben, sondern in der Herstellung einer separaten Platte als Halbzeug. Diese Platte besteht aus vorzugsweise 50 bis 90 Masse-% Aluminiumhydroxid und 10 bis 50 Masse-% Wasserglas und ist auf beiden großen Flächen mit einem Glasgewebe bedeckt, wobei je nach Ausführungsform auch Kieselsol oder Magnesiabinder verwendet werden. Die Dicke dieser separaten Platte beträgt vorzugsweise 4 bis 5 mm, bei Seitenlängen der Platten von beispielsweise 50 bis 100 cm x 150 bis 200 cm.

Der Erfindung liegt die Aufgabe zugrunde, die Herstellung solcher Brandschutzelemente zu vereinfachen und kostengünstiger zu gestalten.

Diese Aufgabe wird gemäß der Erfindung bei einem Brandschutzelement nach dem Oberbegriff des Anspruches 1 dadurch gelöst, daß die mittlere Schicht aus einer Gipsplatte besteht, die mit den Mineralwolle-, insbesondere Steinwolle-Dämmplatten durch einen Kleber aus anorganischen Bestandteilen verbunden sind.

Anstelle der in einem speziellen Prozeß aufwendig hergestellten bekannten Brandschutzplatte geht die erfindungsgemäße Lösung von der Verwendung von Gipsbauplatten aus. Diese können in einer bevorzugten Ausführungsform auf beiden großen Oberflächen mit einem Gewebe oder einem Vlies aus Glasfasern versehen sein. Die Mindest-Rohdichte dieser Platten beträgt ca. 850 kg/m³. Die Platten weisen Dicken von ca. 4 bis 15 mm auf, vorzugsweise werden aber Platten von ca. 4 bis 8 mm verwendet. Die Gipsplatten werden mit Hilfe eines Klebers (z.B. Conlit-Kleber F), der im wesentlichen aus einem Gemisch von Wasserglas und Tonmineralien (z.B. Kaolinit) besteht, mit den Mineralwolle-, insbesondere Steinwolle-Dämmplatten verbunden. Der Kleber trägt durch die Stabilisierung und Abdichtung der Grenzflächen wesentlich zur Wirksamkeit der Verbundplatte bei.

Die Mineralwolle-, insbesondere Steinwolle-Dämmplatten weisen Rohdichten ≥ ca. 120 kg/m³ bis ca. 200 kg/m³, vorzugsweise ca. 150 ― 170 kg/m³ auf. Der Gehalt an organischen Bestandteilen beträgt weniger als ca. 3 Masse-%.

Durch die Verwendung von vorgefertigten Gipsplatten für die mittlere Schicht der Brandschutzelemente, die ein- oder beidseitig mit einem Gewebe oder einem Vlies aus Glasfasern als Auflage für die Mineralwolle-, insbesondere Steinwolle-Dämmplatten versehen sein können, ergibt sich eine wesentliche Vereinfachung der Herstellung solcher Brandschutzelemente, die auch zu einer Beschleunigung des Herstellungsverfahrens führt. Die Gipsplatten bilden einen stabilen Unterbau für die außenliegenden Mineralwolle-, insbesondere Steinwolle-Dämmplatten. Für die Verklebung mit diesen wird weniger Kleber benötigt, der deshalb auch schneller aushärtet und damit zu einer erheblichen Produktionssteigerung auf den vorhandenen Produktionseinrichtungen führt.

Ein bevorzugtes Ausführungsbeispiel der Erfindung ist in der Zeichnung schematisch dargestellt. Es zeigen
- Fig. 1: einen Ausschnitt eines Brandschutzelementes mit Schichtstruktur in perspektivischer Ansicht und
- Fig. 2: eine Ansicht in Richtung des Pfeiles II von Fig. 1.

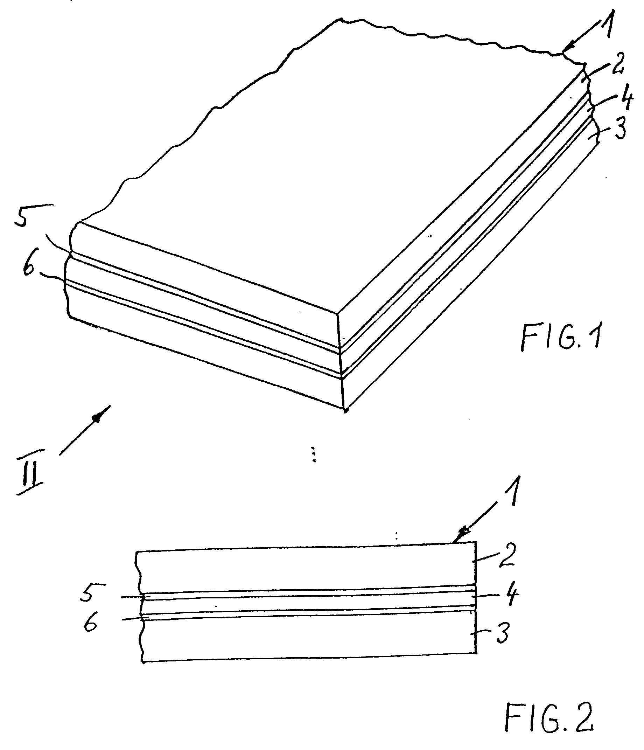

Das Brandschutzelement 1 von Fig. 1 und 2 ist insbesondere für Feuerschutztüren bestimmt und besteht aus vorzugsweise zwei äußeren Steinwolle-Dämmplatten 2, 3 und zumindest einer mittleren Schicht 4 aus anorganischem Werkstoff.

Die mittlere Schicht 4 ist eine Gipsplatte, die mit den Steinwolle-Dämmplatten 2, 3 durch einen Kleber aus anorganischen Bestandteilen verbunden ist. Die Gipsplatte 4 ist vorzugsweise auf beiden großen Oberflächen mit einem Gewebe oder einem Vlies aus Glasfasern 5, 6 versehen.

Sie hat eine Mindest-Rohdichte von etwa 800 kg/m³ und eine Dicke von etwa 4 bis 15 mm. Die Dicke kann auch etwa 4 bis 8 mm betragen, soweit die Feuerschutzbestimmungen dies zulassen.

Der Kleber, durch den die beiden Steinwolle-Dämmplatten 2, 3 großflächig mit der mittleren Gipsplatte 4 verbunden sind, besteht im wesentlichen aus einem Gemisch von Wasserglas und Tonmineralien, wie Kaolinit.

Je nach den in Frage kommenden Feuerschutzklassen können die Steinwolle-Dämmplatten Rohdichten ≥ ca. 120 kg/m³ bis ca. 200 kg/m³ aufweisen, wobei eine Rohdichte von etwa 150 bis 170 kg/m³ sich in zahlreichen Anwendungsfällen als vorteilhaft erwiesen hat.

Die auf diese Weise hergestellten Steinwolle-Gips-Verbundplatten werden einmal in symmetrischer Anordnung in die Blechkonstruktion der Feuerschutztür eingelegt. Die Abmessungen des Brandschutzelements 1 entsprechen den InnenAbmessungen des Feuerschutzelements.

Bei geringeren Anforderungen an die Feuerwiderstandsdauer ist auch die Kombination einer Steinwolle-Gips-Verbundplatte mit nur einer Steinwolle-Dämmplatte möglich, wobei die Gipsplatte in etwa mittig in der Tür angeordnet ist.

### Liste der Bezugszeichen

- 1: Brandschutzelement
- 2: Steinwolle-Dämmplatte
- 3: Steinwolle-Dämmplatte
- 4: Mittlere Schicht, Gipsplatte
- 5: Gewebe oder Vlies aus Glasfasern
- 6: Gewebe oder Vlies aus Glasfasern

## Patentansprüche

1. Brandschutzelement mit Schichtstruktur, insbesondere für Feuerschutztüren, bestehend aus vorzugsweise zwei äußeren Mineralwoll-, insbesondere Steinwolle-Dämmplatten und zumindest einer mittleren Schicht aus anorganischem Werkstoff,
**dadurch gekennzeichnet,**
**daß** die mittlere Schicht (4) aus einer Gipsplatte besteht, die mit den Mineralwoll-, insbesondere Steinwolle-Dämmplatten (2, 3) durch einen Kleber aus anorganischen Bestandteilen verbunden ist.

2. Brandschutzelement nach Anspruch 1,
**dadurch gekennzeichnet,**
**daß** die Gipsplatte (4) auf mindestens einer großen Oberfläche mit einem Gewebe oder einem Vlies aus Glasfasern (5, 6) versehen ist.

3. Brandschutzelement nach Anspruch 1 oder 2,
**dadurch gekennzeichnet,**
**daß** die Gipsplatte (4) eine Mindest-Rohdichte von etwa 800 kg/m³ hat.

4. Brandschutzelement nach einem der Ansprüche 1 bis 3,
**dadurch gekennzeichnet,**
**daß** die Gipsplatte (4) eine Dicke von etwa 4 bis 15 mm hat.

5. Brandschutzelement nach Anspruch 4,
**dadurch gekennzeichnet,**
**daß** die Gipsplatte (4) eine Dicke von etwa 4 bis 8 mm hat.

6. Brandschutzelement nach einem der Ansprüche 1 bis 5,
**dadurch gekennzeichnet,**
**daß** der Kleber im wesentlichen aus einem Gemisch von Wasserglas und Tonmineralien, wie Kaolinit, besteht.

7. Brandschutzelement nach einem der Ansprüche 1 bis 6,
**dadurch gekennzeichnet,**
**daß** die Mineralwolle-, insbesondere Steinwolle-Dämmplatten (2, 3) Rohdichten ≥ ca. 120 kg/m³ bis ca. 200 kg/m³ aufweisen.

8. Brandschutzelement nach Anspruch 7,
**dadurch gekennzeichnet,**
**daß** die Mineralwolle-, insbesondere Steinwolle-Dämmplatten (2, 3) eine Rohdichte von etwa 150 bis 170 kg/m³ aufweisen.
